# EUROPÄISCHE PATENTSCHRIFT

(11) **EP 1 984 218 B1**
(45) Veröffentlichungstag und Bekanntmachung des Hinweises auf die Patenterteilung: **08.12.2010**
(21) Anmeldenummer: 07703599.6
(22) Anmeldetag: 03.01.2007
(51) Int. Cl.: B60T 8/36

(54) **BAUEINHEIT MIT EINEM STEUERGERÄTGEHÄUSE UND EINEM HYDROAGGREGATGEHÄUSE**
STRUCTURAL UNIT HAVING A CONTROL UNIT HOUSING AND A HYDRAULIC ASSEMBLY HOUSING
ENSEMBLE COMPRENANT UN BOITIER D'APPAREIL DE COMMANDE ET UN BOITIER DE GROUPE HYDRAULIQUE

(30) Priorität: 06.02.2006 DE 102006005185
(43) Veröffentlichungstag der Anmeldung: 29.10.2008
(73) Patentinhaber: Robert Bosch GmbH, 70442 Stuttgart (DE)
(72) Erfinder: WEH, Andreas, 87477 Sulzberg (DE)
(86) Internationale Anmeldenummer: PCT/EP2007/050026
(87) Internationale Veröffentlichungsnummer: WO 2007/090689

(56) Entgegenhaltungen:
- EP-A2- 0 658 463
- EP-A2- 0 882 632
- WO-A1-2004/074061

## Beschreibung

### Stand der Technik

Die Erfindung betrifft eine Baueinheit mit einem Steuergerätgehäuse und einem Hydroaggregatgehäuse gemäß der im Oberbegriff des Patentanspruches 1 näher definierten Art.

In der Praxis kann zwischen hydraulischen Systemen, bei welchen sich ein Steuergerät direkt an einem Hydroaggregat befindet, und hydraulischen Systemen mit einer separaten Anordnung dieser Komponenten unterschieden werden. Bei Systemen, bei denen sich das Steuergerät direkt an dem Hydroaggregat befindet, muss ein von dem Steuergerätgehäuse und dem Hydroaggregatgehäuse gebildeter Aufnahmeraum für elektrische Komponenten gegenüber Umwelteinflüssen wie Temperatur, Flüssigkeiten wie Öl oder Bremsflüssigkeit sowie mechanischen Belastungen wie z. B. Schmutz abgedichtet werden.

Aus der Praxis bekannt ist dabei eine Abdichtung des Aufnahmeraums über eine Dichtung einer Kontaktfläche der beiden Gehäuse mittels einer Flüssigdichtung. Nachteilhafterweise ist bei einer solchen Ausgestaltung eine große Wandstärke des Gehäuses notwendig, welche hohe Materialkosten verursacht.

Eine Baueinheit nach den gattungsbildenden Merkmalen des Anspruchs 1 offenbart die WO 2004/074061 A1. Bei diesem Stand der Technik ist das elektrische Bauelement ein Drucksensor mit einem Sensorgehäuse, das an lediglich einer seiner beiden Kontaktflächen gedichtet in einem Aufnahmeraum angeordnet ist. Hierfür wird eine in einem Flüssigverfahren aufgetragene, dem betreffenden elektrischen Bauelement einzeln zugeordnete Dichtung eingesetzt. Letztere ist an der Kontaktfläche zwischen einer Ummantelung des elektrischen Bauelements und einem Steuergerätegehäuse angeordnet.
Nachteil dieser Baueinheit ist, dass sich durch kapillare Wirkung Feuchtigkeit an einer gegenüberliegenden zweiten Kontaktfläche zwischen der Ummantelung des elektrischen
Bauelements und einem Hydroaggregatgehäuse ansammeln und in den Aufnahmeraum eindringen kann.

Bekannt ist aus der EP 882 632 A2 ferner ein hydraulisches Aggregat für eine Fahrzeugbremsanlage bei dem ein Dichtelement, gebildet von einer Raupe aus flüssigem Silikongummi, der im Laufe der Zeit in einen gummielastischen Zustand übergeht, eingesetzt wird, um an einem Gehäuseblock ausgebildete und von Verschlusselementen verschlossene Bohrungen gegenüber der Umgehung abzudichten.

Zu einem Abdichten des Aufnahmeraums ist es weiterhin aus der Praxis bekannt, dass der Aufnahmeraum mit einer Dichtmasse vergossen wird. Dies erfordert aber einen großen Materialeinsatz, wodurch das Gewicht der gesamten Baueinheit negativ beeinflusst ist. Des Weiteren resultieren aus dem großen Materialeinsatz entsprechend hohe Materialkosten.

Ebenfalls aus der Praxis bekannt ist die Abdichtung der sich im Aufnahmeraum befindlichen elektrischen Komponenten über Einzelabdichtungen, welche über Einlegedichtungen realisiert sind. Bei einer solchen konstruktiven Ausgestaltung ist es nachteilhafterweise notwendig, die Kontaktflächen für die Einlegedichtungen zu bearbeiten, wodurch hohe Bearbeitungskosten verursacht werden und sich der Montageprozess schwierig und aufwändig gestaltet.

Ausgehend vom oben zitierten nächstkommenden Stand der Technik, besteht die von der Erfindung zu lösende Aufgabe darin, eine Ansammlung von Feuchtigkeit unter der Ummantelung des elektrischen Bauelements zuverlässig und auf möglichst kostengünstige Art und Weise zu verhindern. Diese Aufgabe löst eine Baueinheit anhand der kennzeichnenden Merkmale des Anspruchs 1.

### Vorteile der Erfindung

Die Erfindung sieht eine Baueinheit mit einem Steuergerätgehäuse und einem Hydroaggregatgehäuse vor, wobei das Steuergerätgehäuse und das Hydroaggregatgehäuse einen Aufnahmeraum für wenigstens ein elektrisches Bauelement mit einer Ummantelung bilden und das wenigstens eine elektrische Bauelement wenigstens im Bereich seiner Kontaktflächen gedichtet in dem Aufnahmeraum angeordnet ist. Erfindungsgemäß ist dabei vorgesehen, dass im Bereich der beiden Kontaktflächen zwischen der Ummantelung des elektrischen Bauelements und dem Steuergerätgehäuse sowie dem Hydroaggregatgehäuse jeweils eine in einem Flüssigverfahren aufgetragene, dem betreffenden elektrischen Bauelement einzeln zugeordnete Dichtung angeordnet ist. Das elektrische Bauelement ist als eine elektromagnetische Spule oder als ein Verbindungsstecker zwischen einem hydroaggregatseitigen Elektromotor und einer elektrischen Regeleinrichtung eines von dem Steuergerätgehäuse aufgenommenen Steuergeräts ausgebindet.

Durch die Verwendung einer Flüssigdichtung kann in vorteilhafter Weise eine Bearbeitung der Kontaktflächen für die Dichtung vermieden werden, woraus eine Reduzierung der Bearbeitungszeiten resultiert.

Weiterhin kann durch die erfindungsgemäße Einzelabdichtung eine geringe Wandstärke des Gehäuses mit geringem Materialeinsatz ohne eine zu dichtende Kontaktfläche zwischen den Gehäusen realisiert werden und bei einer Kunststofffertigung die Extrusionsrichtung derart geändert werden, dass die Entgratlänge gering gehalten wird.
Eine besonders einfache Ausgestaltung der Dichtung wird dadurch ermöglicht, dass die Dichtung radial um einen Verbindungsbereich des elektrischen Bauelements mit dem Hydroaggregatgehäuse oder dem Steuergerätgehäuse seitens des Aufnahmeraums angeordnet ist.

Zweckmäßigerweise ist der Verbindungsbereich des elektrischen Bauelements mit dem Steuergerätgehäuse bzw. dem Hydroaggregatgehäuse derart ausgebildet, dass das Steuergerätgehäuse bzw. das Hydroaggregatgehäuse eine der Umfangskontur des elektrischen Bauelements entsprechend geformte Aussparung aufweist, in welche das elektrische Bauelement eingesetzt ist, wobei die Dichtung wenigstens annähernd ringförmig an der Umfangskontur der Aussparung angeordnet ist.

In einer vorteilhaften Ausgestaltung der Erfindung kann das wenigstens eine elektrische Bauelement als eine elektromagnetische Spule ausgebildet sein. Der Wirkungsgrad der Spule wird in vorteilhafter Weise bei der Verwendung einer erfindungsgemäßen Flüssigdichtung durch die Möglichkeit der Einhaltung geringer axialer Toleranzen verbessert, wodurch das Thermikkonzept der Baueinheit positiv beeinflusst werden kann.

Weiterhin kann das wenigstens eine elektrische Bauelement als ein Verbindungsstecker ausgeführt sein, dessen Ummantelung als ein hülsenartiger Bereich des Steuergerätgehäuses ausgebildet ist, welcher mit einem Ende mit einer von einer Seitenwand des Steuergerätgehäuses begrenzten Bodenfläche fest verbunden ist.

Wenn das wenigstens eine elektrische Bauelement als ein an dem Hydroaggregatgehäuse festgelegtes Magnetventil ausgebildet ist, so wird die Regeltoleranz des Magnetventils durch die mit einer Flüssigabdichtung erreichbaren geringen axialen Toleranzen in vorteilhafter Weise verbessert.

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel einer erfindungsgemäß ausgestalteten Baueinheit ist in der Zeichnung schematisch vereinfacht dargestellt und wird in der nachfolgenden Beschreibung näher erläutert. Es zeigen:
- Figur 1: eine stark vereinfachte dreidimensionale Ansicht einer Baueinheit mit einem Steuergerätgehäuse und einem Hydroaggregatgehäuse eines Bremssystems eines Kraftfahrzeugs;
- Figur 2: eine vereinfachte perspektivische Ansicht des Steuergerätgehäuses der Figur 1 in Alleinstellung;
- Figur 3: einen schematisierten Längsschnitt durch einen hülsenartigen Be- reich des Steuergerätgehäuses mit einem darin angeordneten Befes- tigungsmittel zur Verbindung mit dem Hydroaggregatgehäuse in ei- nem Montagezustand;
- Figur 4: einen schematisierten Längsschnitt durch einen hülsenartigen Be- reich des Steuergerätgehäuses gemäß Figur 3 mit dem Befesti- gungsmittel in montiertem Zustand;
- Figur 5: den hülsenartigen Bereich gemäß Figur 4 mit einem durch das Be- festigungselement geführten Verbindungsstecker;
- Figur 6: einen schematisierten Längsschnitt durch eine Spule und ein Mag- netventil in einem Aufnahmeraum in montiertem Zustand;
- Figur 7: einen vergrößerten Ausschnitt der Figur 6, welcher die Festlegung und die Abdichtung der Spulen an dem Steuergerätgehäuse näher darstellt;
- Figur 8: einen vergrößerten Ausschnitt der Figur 6, welcher die Festlegung der Spulen an dem Hydroaggregatgehäuse näher darstellt;
- Figur 9: eine vereinfachte dreidimensionale Ansicht eines Hydroaggregatge- häuses mit daran festgelegten Magnetventilen;
- Figur 10: eine Rückansicht des Steuergerätgehäuses der Figur 2 mit einem Deckel und einer hierin enthaltenen Leiterplatte; und
- Figur 11: eine vereinfachte Schnittdarstellung eines Bereiches des Steuerge- rätgehäuses gemäß Figur 6.

### Beschreibung des Ausführungsbeispiels

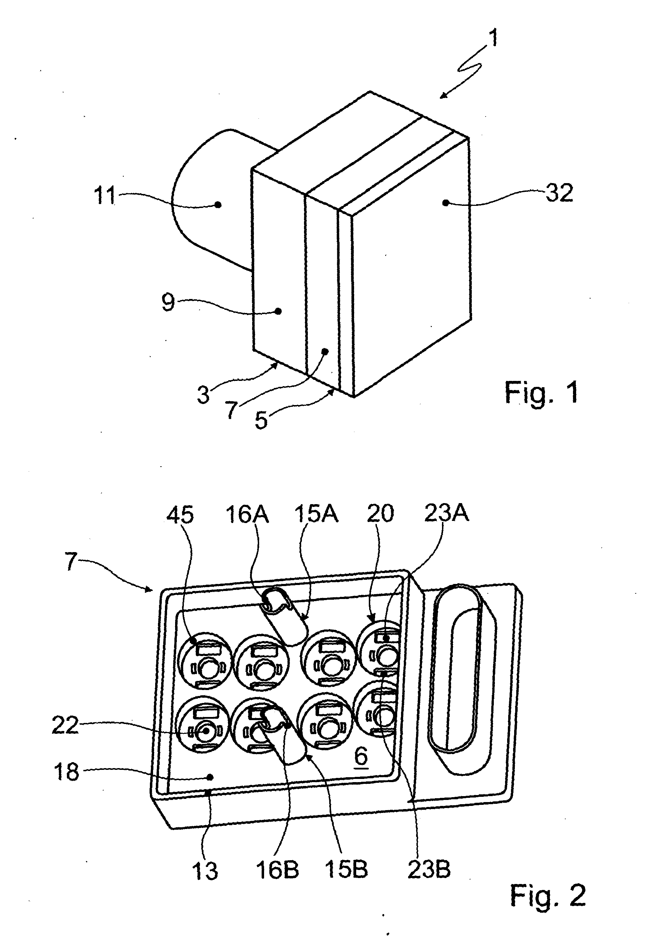

In Figur 1 ist eine Baueinheit 1 dargestellt, welche eine Regeleinrichtung einer nicht weiter dargestellten Fahrzeugbremsanlage bildet und als Hauptkomponenten ein Hydroaggregat 3 mit einem Elektromotor 11 und ein Steuergerät 5 aufweist. In das Hydroaggregat 3 sind in bekannter Weise Kolbenpumpen, Magnetventile 8, Hydrospeicher, Dämpferkammern und dergleichen hydraulische Bauelemente eingesetzt und hydraulisch miteinander verschaltet. Das Steuergerät 5, welches eine die Kolbenpumpen, den hiermit verbundenen Elektromotor 11 sowie die Magnetventile 8 des Hydroaggregats 3 ansteuernde elektronische Regelschaltung in Form einer Leiterplatte 42 aufweist, ist mit dem Hydroaggregat 3 verbunden.

Die Verbindung des Steuergeräts 5 mit dem Hydroaggregat 3 wird dabei über eine Verbindung des Steuergerätgehäuses 7 des Steuergeräts 5 mit einem Hydroaggregatgehäuse 9 des Hydroaggregats 3 realisiert.

Das in Figur 2 näher dargestellte Steuergerätgehäuse 7 ist mit hülsenartigen Bereichen in Form von einer ersten Röhre 15A und einer zweiten Röhre 15B ausgebildet, welche an ihrem einer Bodenfläche 18 des Steuergeräts 7 abgewandten Ende jeweils einen in Röhren-Längsrichtung verlaufenden Schlitz 16A bzw. 16B zur Erhöhung der Elastizität aufweisen. Die Röhren 15A und 15B sind jeweils an einem Ende mit der Bodenfläche 18 fest verbunden, welche von einer Seitenwand 13 des Steuergerätgehäuses 7 begrenzt ist. In Richtung ihres der Bodenfläche 18 des Steuergerätgehäuses 7 abgewandten Endes weisen die Röhren 15A, 15B jeweils eine Durchmesserverjüngung auf, wobei zur Durchmesserverjüngung ein gestufter Absatz 17 dient.

Die Bodenfläche 18 des Steuergerätgehäuses 7 weist vorliegend acht runde Aussparungen 20 zur Aufnahme einzelner Spulen 40 auf, wobei die Aussparungen 20 mittig ein konzentrisches Durchgangsloch 22 für das Magnetventil 8 und in der Nähe ihres Umfangs zwei längliche Schlitze 23A, 23B für Kontaktstecker 41A, 41B, welche zur Verbindung der Spulen 40 mit der Leiterplatte 42 dienen, aufweisen.

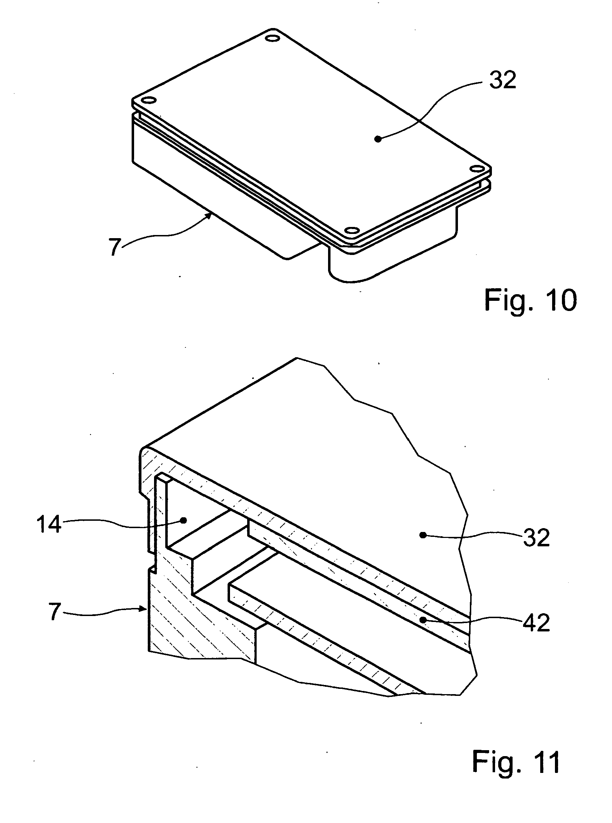

Wie den Figuren 10 und 11 zu entnehmen ist, ist die Leiterplatte 42 an der Rückseite des Steuergerätgehäuses 7 in einen Deckel 32 integriert, welcher über eine Schweißverbindung oder Klebeverbindung an einem Rahmen 14 des Steuergerätgehäuses 7, welcher sich von der den Röhren 15A, 15B abgewandten Seite der Bodenfläche 18 weg erstreckt, dichtend festgelegt, so dass für die Verbindung des Deckels 32 mit dem Steuergerätgehäuse 7 auf Schrauben außerhalb der Seitenwände 13 des Steuergerätgehäuses 7 verzichtet werden kann.

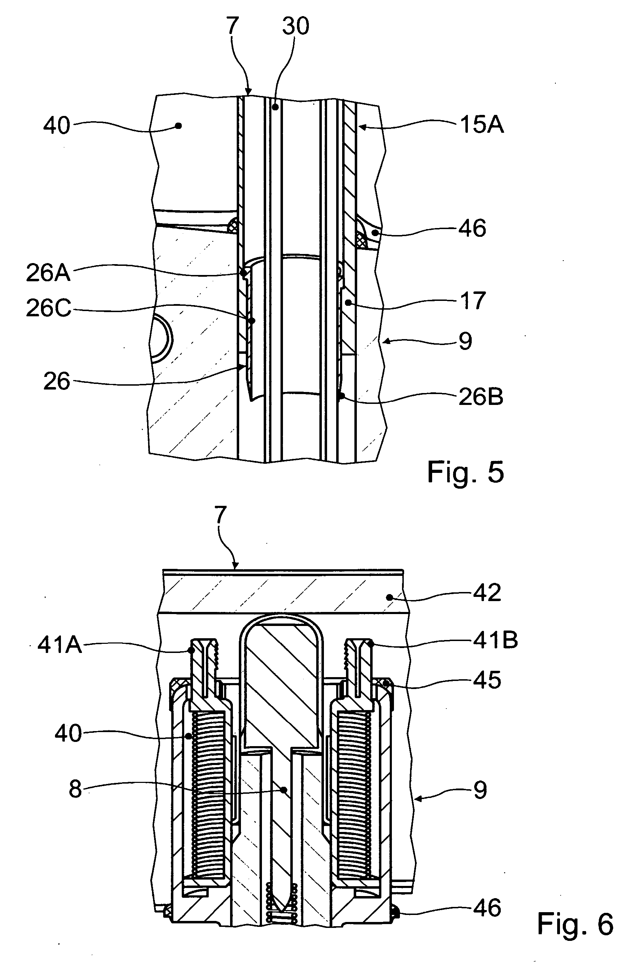

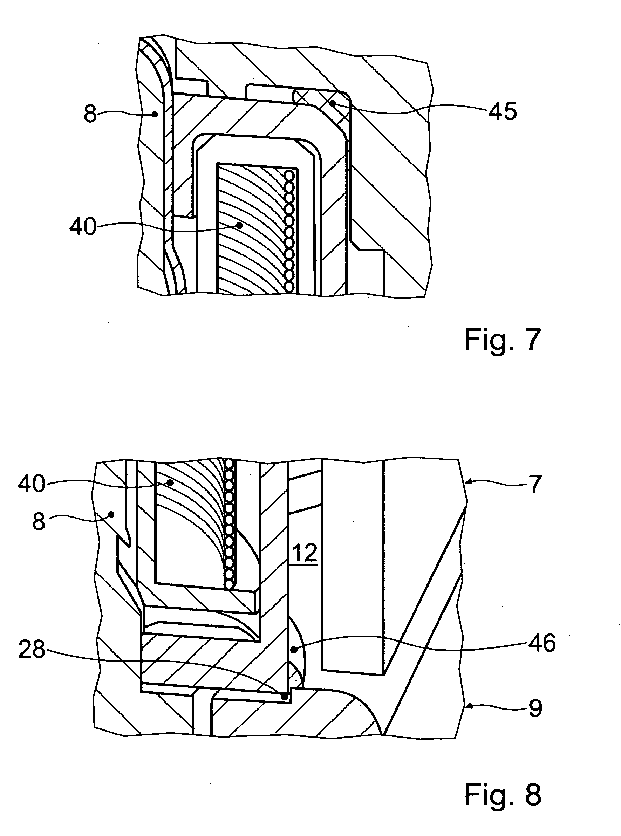

Wie auch den Figuren 6 und 7 zu entnehmen ist, ist an einem Umfang der Aussparung 20 jeweils eine Flüssigdichtung 45 bzw. 46 vorzugsweise aus Silikon aufgetragen, wobei die erste Dichtung 45 einer Abdichtung der Spulen 40 gegenüber dem Steuergerätgehäuse 7 und die jeweils zweite Dichtung 46 einer Abdichtung der Spulen 40 gegenüber dem Hydroaggregatgehäuse 9 dient. Die Spule 40 rastet bei einem Einführen in die Aussparung 20 über eine sich in der Aussparung 20 befindliche Vertiefung 28 in diese ein und ist hieran festgelegt.

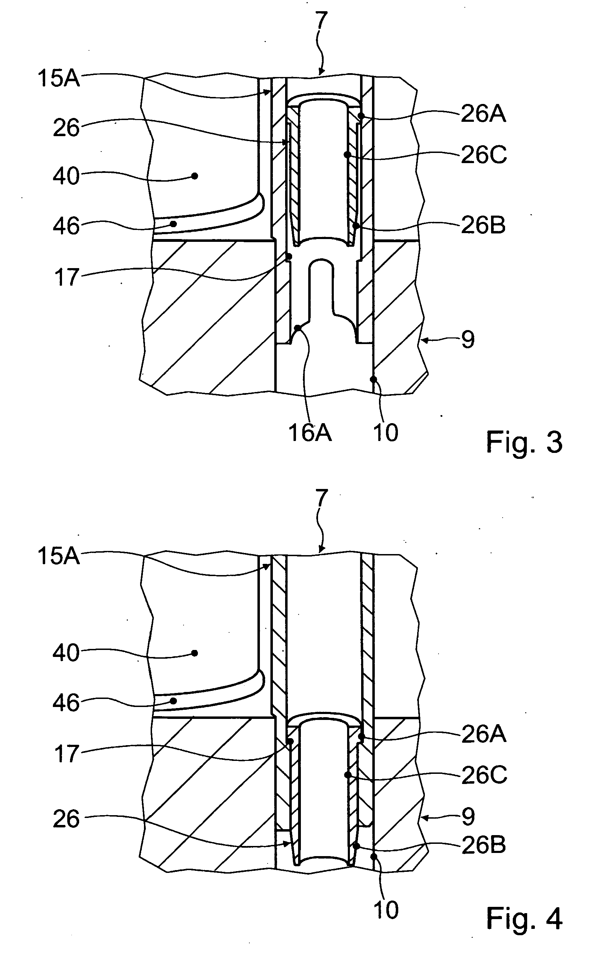

Figur 3 und Figur 4 zeigen von den analog ausgebildeten Röhren 15A und 15B exemplarisch die erste Röhre 15A des Steuergerätgehäuses 7, von welcher ein der Bodenfläche 18 abgewandter Bereich durch eine Bohrung 10 des Hydroaggregatgehäuses 9 geführt ist. Das Steuergerätgehäuse 7 ist dabei soweit in die Bohrung 10 des Hydroaggregatgehäuses 9 eingeführt, dass die in das Steuergerätgehäuse 7 eingebrachten Spulen 40 auf dem Hydroaggregatgehäuse 9 aufliegen.

Ein als Befestigungselement dienender bolzenartiger Pin 26, welcher an seinem der Bodenfläche 18 des Steuergerätgehäuses 7 abgewandten Ende eine Einführ-Schräge 26B und an seinem der Bodenfläche 18 des Steuergerätgehäuses 7 zugewandten Ende einen radial erweiterten Abschnitt 26A aufweist, ist in Figur 3 in einem Montagezustand und in Figur 4 in montiertem Zustand dargestellt.

In montiertem Zustand weitet der Pin 26 die Röhre 15A im Bereich von deren Durchmesserverjüngung 17 auf und drückt die Röhre 15A in der Bohrung 10 des Hydroaggregatgehäuses 9 gegen das Hydroaggregatgehäuses 9, so dass die Röhre 15A und somit das Steuergerätgehäuse 7 am Hydroaggregatgehäuse 9 befestigt ist. Der Pin 26 ist in montiertem Zustand soweit in die Röhre 15A des Steuergerätgehäuses eingeführt, dass der radial erweiterte Abschnitt 26A des Pins 26 an dem Absatz 17 der Röhre 15A des Steuergerätgehäuses 7 aufliegt.

Wie der Figur 5 zu entnehmen ist, ist der mit einer Durchgangsöffnung 26C versehene Pin 26 bei der gezeigten Ausführung in einem vormontierten Zustand mit einem Verbindungsstecker des Motors 30 verpresst, so dass der Verbindungsstecker 30 in montiertem Zustand durch die Röhre 15A des Steuergerätgehäuses 7 geführt ist.

Zur Abdichtung der den Verbindungsstecker 30 enthaltenden Röhre 15A gegenüber dem Hydroaggregatgehäuse 9 ist eine dritte Flüssigdichtung 47 radial um die Bohrung 10 des Hydroaggregatgehäuses 9 aufgetragen, in welche die den Verbindungsstecker 30 enthaltende Röhre 15A in montiertem Zustand geführt ist.

Das Vernetzen und Aushärten der im Flüssigverfahren aufgebrachten bzw. dispensten Dichtung 47, welche sich bei einem Einführen der Röhre 15A in die Bohrung 10 des Hydroaggregatgehäuses 9 radial verteilt, kann vorteilhafterweise wie auch bei Dichtungen 45, 46 bei Raumtemperatur erfolgen, da das Steuergerätgehäuse 7 über den Pin 26 mechanisch am Hydroaggregatgehäuse 9 gehalten ist.

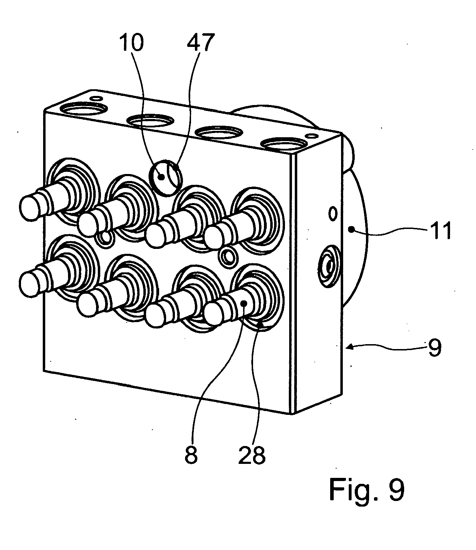

Wie der Figur 9 zu entnehmen ist, ist radial um die mit dem Hydroaggregatgehäuse 9 hydraulisch dichtverstemmten Magnetventile 8 in dem Hydroaggregatgehäuse 9 jeweils eine Vertiefung 28 zur Aufnahme der Spulen 40 vorgesehen, in welchen sich die Spulen 40 in montiertem Zustand befinden. Die Spulen 40 bestimmen dabei den Abstand zwischen dem Steuergerätgehäuse 7 und dem Hydroaggregatgehäuse 9.

Die Figur 6 und Figur 8 zeigen die um die einzelnen Vertiefungen 28 radial verteilte Flüssigdichtung 46, welche bei einem Einführen der Spulen 40 in die Vertiefungen 28 bei Raumtemperatur aushärtet. Die axialen Toleranzen der Spule 40 sind in montiertem Zustand sehr gering, wodurch der Wirkungsgrad der Spulen 40 und das Thermikkonzept der gesamten Baueinheit positiv beeinflusst werden und die Regelgüte der in montiertem Zustand durch die Spulen 40 geführten Magnetventile 8 gegenüber Einlegedichtungen verbessert ist.

Durch die erfindungsgemäße Abdichtung des von dem Steuergerätgehäuse 7 und dem Hydroaggregatgehäuse 9 gebildeten Aufnahmeraums 12, kann der Aufnahmeraum 12 in montiertem Zustand mit einem Medium durchflutet werden, ohne dass die elektronischen Komponenten mit dem Medium in Berührung kommen.

## Patentansprüche

1. Baueinheit mit einem Steuergerätgehäuse (7) und einem Hydroaggregatgehäuse (9), wobei das Steuergerätgehäuse (7) und das Hydroaggregatgehäuse (9) einen Aufnahmeraum (12) für wenigstens ein elektrisches Bauelement (8, 30, 40) mit einer Ummantelung (15A) bilden und das wenigstens eine elektrische Bauelement (8, 30, 40) im Bereich einer seiner Kontaktflächen gedichtet in dem Aufnahmeraum (12) angeordnet ist, wobei im Bereich der Kontaktfläche zwischen der Ummantelung (15A) des elektrischen Bauelements (8, 30, 40) und dem Steuergerätgehäuse (7) eine in einem Flüssigverfahren aufgetragene, dem betreffenden elektrischen Bauelement (8, 30, 40) einzeln zugeordnete Dichtung (45) angeordnet ist, **dadurch gekennzeichnet, dass** beide Bereiche der Kontaktflächen des elektrischen Bauelements (8, 30, 40) gedichtet in dem Aufnahmeraum (12) angeordnet sind und dass im Bereich der Kontaktfläche zwischen der Ummantelung (15A) des elektrischen Bauelements (8, 30, 40) und dem Hydroaggregatgehäuse (9) ebenfalls eine in einem Flüssigkeitsverfahren aufgetragene, dem betreffenden elektrischen Bauelement (8, 30, 40) einzeln zugeordnete Dichtung (46, 47) angeordnet ist, wobei das wenigstens eine elektrische Bauelement (8, 30, 40) als eine elektromagnetische Spule (40) oder als ein Verbindungsstecker (30) zwischen einem hydroaggregatseitigen Elektromotor (11) und einer elektrischen Regeleinrichtung eines von dem Steuergerätgehäuse (7) aufgenommenen Steuergeräts (5) ausgebildet ist.

2. Baueinheit nach Anspruch 1, **dadurch gekennzeichnet, dass** die Dichtungen (45, 46, 47) radial um einen Verbindungsbereich (10, 20, 28) des elektrischen Bauelements (8, 30, 40) mit dem Hydroaggregatgehäuse (9) und mit dem Steuergerätgehäuse (7) seitens des Aufnahmeraums (12) angeordnet ist.

3. Baueinheit nach Anspruch 2, **dadurch gekennzeichnet, dass** der Verbindungsbereich des elektrischen Bauelements (40) mit dem Steuergerätgehäuse (7) derart ausgebildet ist, dass das Steuergerätgehäuse (7) eine der Umfangskontur des elektrischen Bauelements (40) entsprechend geformte Aussparung (20) aufweist, in welche das elektrische Bauelement (40) eingesetzt ist, wobei die Dichtung (45) wenigstens annähernd ringförmig an der Umfangskontur der Aussparung (20) angeordnet ist.

4. Baueinheit nach Anspruch 2, **dadurch gekennzeichnet, dass** der Verbindungsbereich des elektrischen Bauelements (8, 30, 40) mit dem Hydroaggregatgehäuse (9) derart ausgebildet ist, dass das Hydroaggregatgehäuse (9) eine der Umfangskontur des elektrischen Bauelements (8, 30, 40) entsprechend geformte Aussparung (10, 28) aufweist, in welche das elektrische Bauelement (8, 30, 40) eingesetzt ist, wobei die Dichtung (46, 47) wenigstens annähernd ringförmig an der Aussparung (10, 28) angeordnet ist.

5. Baueinheit nach Anspruch 1, **dadurch gekennzeichnet, dass** die Ummantelung (15A) des Verbindungssteckers (30) als ein hülsenartiger Bereich (15A) des Steuergerätgehäuses (7) ausgebildet ist, welcher mit einem Ende mit einer von einer Seitenwand (13) begrenzten Bodenfläche (18) des Steuergerätgehäuses (7) fest verbunden ist.

6. Baueinheit nach einem der Ansprüche 1 bis 4, **dadurch gekennzeichnet, dass** das wenigstens eine elektrische Bauelement als ein an dem Hydroaggregatgehäuse (9) festgelegtes Magnetventil (8) ausgebildet ist.

## Claims

1. Structural unit with a control-unit housing (7) and with a hydraulic-assembly housing (9), the control-unit housing (7) and the hydraulic-assembly housing (9) forming a reception space (12) for at least one electrical structural element (8, 30, 40) with a sheathing (15A), and the at least one electrical structural element (8, 30, 40) being arranged, sealed in the region of one of its contact surfaces, in the reception space (12), there being arranged in the region of the contact surfaces, between the sheathing (15A) of the electrical structural element (8, 30, 40) and the control-unit housing (7), a seal (45) which is applied by a liquid method and is assigned individually to the respective electrical structural element (8, 30, 40), **characterized in that** both regions of the contact surfaces of the electrical structural element (8, 30, 40) are arranged, sealed, in the reception space (12), and **in that** a seal (46, 47) applied by the liquid method and assigned individually to the respective electrical structural element (8, 30, 40) is likewise arranged in the region of the contact surface, between the sheathing (15A) of the electrical structural element (8, 30, 40) and the hydraulic-assembly housing (9), the at least one electrical structural element (8, 30, 40) being designed as an electromagnetic coil (40) or as a connecting plug (30) between an electric motor (11) located on the hydraulic-assembly side and an electrical regulating device of a control unit (5) received by the control-unit housing (7).

2. Structural unit according to Claim 1, **characterized in that** the seals (45, 46, 47) are arranged radially around a region of connection (10, 20, 28) of the electrical structural element (8, 30, 40) to the hydraulic-assembly housing (9) and to the control-unit housing (7) on the side of the reception space (12).

3. Structural unit according to Claim 2, **characterized in that** the region of connection of the electrical structural element (40) to the control-unit housing (7) is designed in such a way that the control-unit housing (7) has a clearance (20) which is shaped correspondingly to the circumferential contour of the electrical structural element (40) and into which the electrical structural element (40) is inserted, the seal (45) being arranged at least approximately annularly on the circumferential contour of the clearance (20).

4. Structural unit according to Claim 2, **characterized in that** the region of connection of electrical structural element (8, 30, 40) to the hydraulic-assembly housing (9) is designed in such a way that the hydraulic-assembly housing (9) has a clearance (10, 28) which is shaped correspondingly to the circumferential contour of the electrical structural element (8, 30, 40) and into which the electrical structural element (8, 30, 40) is inserted, the seal (46, 47) being arranged at least approximately annularly on the clearance (10, 28).

5. Structural unit according to Claim 1, **characterized in that** the sheathing (15A) of the connecting plug (30) is designed as a sleeve-like region (15A) of the control-unit housing (7), which sleeve-like region is fixedly connected at one end to a bottom surface (18), delimited by a side wall (13), of the control-unit housing (7).

6. Structural unit according to one of Claims 1 to 4, **characterized in that** the at least one electrical structural element is designed as a solenoid valve (8) secured to the hydraulic-assembly housing (9).

## Revendications

1. Unité structurelle comprenant un boîtier d'appareil de commande (7) et un boîtier de groupe hydraulique (9), le boîtier d'appareil de commande (7) et le boîtier de groupe hydraulique (9) formant un espace de réception (12) pour au moins un composant électrique (8, 30, 40) avec une enveloppe (15A) et l'au moins un composant électrique (8, 30, 40) étant disposé de manière hermétique dans l'espace de réception (12) dans la région de l'une de ses surfaces de contact, un joint d'étanchéité (45) appliqué par un procédé fluidique, associé individuellement au composant électrique concerné (8, 30, 40), étant disposé dans la région des surfaces de contact entre l'enveloppe (15A) du composant électrique (8, 30, 40) et le boîtier d'appareil de commande (7), **caractérisée en ce que** les deux régions des surfaces de contact du composant électrique (8, 30, 40) sont disposées de manière hermétique dans l'espace de réception (12) et **en ce que** dans la région des surfaces de contact entre l'enveloppe (15A) du composant électrique (8, 30, 40) et le boîtier de groupe hydraulique (9) est également disposé un joint d'étanchéité (46, 47) associé individuellement au composant électrique concerné (8, 30, 40) et appliqué par un procédé fluidique, l'au moins un composant électrique (8, 30, 40) étant réalisé sous forme de bobine électromagnétique (40) ou sous forme d'une fiche de connexion (30) entre un moteur électrique (11) du côté du groupe hydraulique et un dispositif de régulation électrique d'un appareil de commande (5) reçu par le boîtier d'appareil de commande (7).

2. Unité structurelle selon la revendication 1, **caractérisée en ce que** les joints d'étanchéité (45, 46, 47) sont disposés radialement autour d'une région de connexion (10, 20, 28) du composant électrique (8, 30, 40) avec le boîtier de groupe hydraulique (9) et avec le boîtier d'appareil de commande (7) du côté de l'espace de réception (12).

3. Unité structurelle selon la revendication 2, **caractérisée en ce que** la région de connexion du composant électrique (40) est réalisée avec le boîtier d'appareil de commande (7) de telle sorte que le boîtier d'appareil de commande (7) présente un évidement (20) de forme correspondant au contour périphérique du composant électrique (40), dans lequel le composant électrique (40) est inséré, le joint d'étanchéité (45) étant disposé au moins approximativement de manière annulaire sur le contour périphérique de l'évidement (20).

4. Unité structurelle selon la revendication 2, **caractérisée en ce que** la région de connexion du composant électrique (8, 30, 40) avec le boîtier de groupe hydraulique (9) est réalisée de telle sorte que le boîtier de groupe hydraulique (9) présente un évidement (10, 28) de forme correspondant au contour périphérique du composant électrique (8, 30, 40), dans lequel le composant électrique (8, 30, 40) est inséré, le joint d'étanchéité (46, 47) étant disposé au moins approximativement de manière annulaire sur l'évidement (10, 28).

5. Unité structurelle selon la revendication 1, **caractérisée en ce que** l'enveloppe (15A) de la fiche de connexion (30) est réalisée sous forme de région de type douille (15A) du boîtier d'appareil de commande (7), qui est connectée fixement par une extrémité à une surface de fond (18) du boîtier d'appareil de commande (7) limitée par une paroi latérale (13).

6. Unité structurelle selon l'une quelconque des revendications 1 à 4, **caractérisée en ce que** l'au moins un composant électrique est réalisé sous forme d'électrovanne (8) fixée sur le boîtier de groupe hydraulique (9).
